# EUROPEAN PATENT SPECIFICATION

(11) **EP 1 465 499 B1**
(45) Date of publication and mention of the grant of the patent: **22.03.2006**
(21) Application number: 02787914.7
(22) Date of filing: 06.12.2002
(51) Int. Cl.: A23G 9/22, A23G 9/12

(54) **MIXING DEVICE FOR ICE-CREAM MAKERS, IN PARTICULAR FOR DOMESTIC USE**
MISCHVORRICHTUNG FÜR EINE SPEISEEISMASCHINE INSBESONDERE FÜR HAUSGEBRAUCH
DISPOSITIF MELANGEUR POUR SORBETIERES, EN PARTICULIER A USAGE DOMESTIQUE

(30) Priority: 28.12.2001 IT MI20012832
(43) Date of publication of application: 13.10.2004
(73) Proprietor: Nemo S.r.l., 25010 S. Zeno Naviglio (IT)
(72) Inventor: PROCURANTI, Walter, I-25086 Rezzato (IT)
(74) Representative: Rapisardi, Mariacristina
(86) International application number: PCT/EP2002/013840
(87) International publication number: WO 2003/055326

(56) References cited:
- EP-A- 0 229 371
- WO-A-01/97628
- DE-A- 3 000 882
- DE-C- 849 562
- FR-A- 1 009 279
- GB-A- 2 139 106
- US-A1- 2001 052 239

## Description

The present finding refers to a mixing device for ice-cream makers, in particular for domestic use.

As is known, ice-cream makers for use at home are provided with a single bowl in which the ice-cream mixture is prepared and with a single blade for mixing it.

In the case in which one wishes to prepare many flavours of ice-cream, it is necessary to proceed to the individual preparation of each flavour and to take care of cleaning the bowl at each change in ice-cream flavour.

For this reason, some ice-cream makers are provided with many removable bowls which allow the preparation of many flavours in sequence without the interruption and the hindrance of the transfer and cleaning operations of the bowls.

The removable bowls are inserted in the fixed bowl and, therefore, their diameter must be less than that of the fixed bowl.

Taking into account that in these machines the delivery of coldness to the ice-cream mixture takes place by contact through the wall of the bowl, the blade, besides carrying out the function of mixing the ingredients together, must spread the mixture on the wall and scrape the mixture away from it once it has cooled.

From that which has been outlined above, it is easy to understand how, to make the cooling of the mixture efficient and fast, the scraping blade must rotate as close as possible to the wall of the bowl, whereas the spreading blade must remain at an appropriate distance from it.

For this reason, when many removable bowls are used many blades must be supplied to the user the sizes of which are related to the different diameters of the bowls.

Another drawback of domestic ice-cream makers is that the rotation of the blade and the progressive cooling of the mixture causes it to be thickened towards the centre of the bowl and in particular near to the axis of rotation of the blade.

This fact makes the mixing of ingredients less homogeneous and also makes it difficult to incorporate air into the mixture, a thing which is essential to have a good softness of the ice-cream and to avoid the unpleasant sensation of a cold and wet product.

Moreover, the presence of air helps a certain degree of thermal homogeneity of the mass to be kept, thus influencing both the quality of the ice-cream and the speed of its preparation.

For this reason, in some machines of this type different shapes of blades have been used which, however, suffer just as much from the aforementioned drawbacks, above all in the presence of a substantially dense mass of ice-cream.

The task proposed of the present finding is that of eliminating the aforementioned drawbacks of the prior art.

US-A-2001/0052239 and DE-A-3 000 882 disclose a device according to the preamble of present claim 1.

In this task, an important purpose of the finding is to realise a mixing device for ice-cream makers which allows the spreading of the mixture on the wall of the bowl to be optimised and at the same time allowing the scraping away of the ice-cream mixture which has cooled on the wall to be optimised.

Yet another purpose of the finding is to realise a mixing device for ice-cream makers which allows the cooling of the mixture to be made efficient and fast, allowing the homogenisation of the mixture of ingredients of the ice-cream to be optimised and promoting the incorporation of air in it, so as to have an end product with excellent softness and quality.

A further purpose of the finding is to realise a mixing device for ice-cream makers which, even using many removable bowls, allows just one mixing blade to be used, independently of the diameters of the bowls used, and therefore allows the number of accessories which the user needs to be reduced.

In this way, the user also does not have to choose which blade, with which configuration, to use for a certain type of ice-cream.

The last but not least purpose of the finding is to realise a mixing device for ice-cream makers which, besides reducing its production time optimising its mixing and quality, allows easy cleaning of the blades which are made in a simple and functional manner, also so as not to increase the cost of the machine for the end user.

This task, as well as these and other purposes are achieved by a mixing device for ice-cream makers according to claim 1.

Further characteristics and advantages of the invention shall become clearer from the description of a preferred but not exclusive embodiment of the device according to the finding, illustrated for indicating and not limiting purposes in the attached drawings in which:

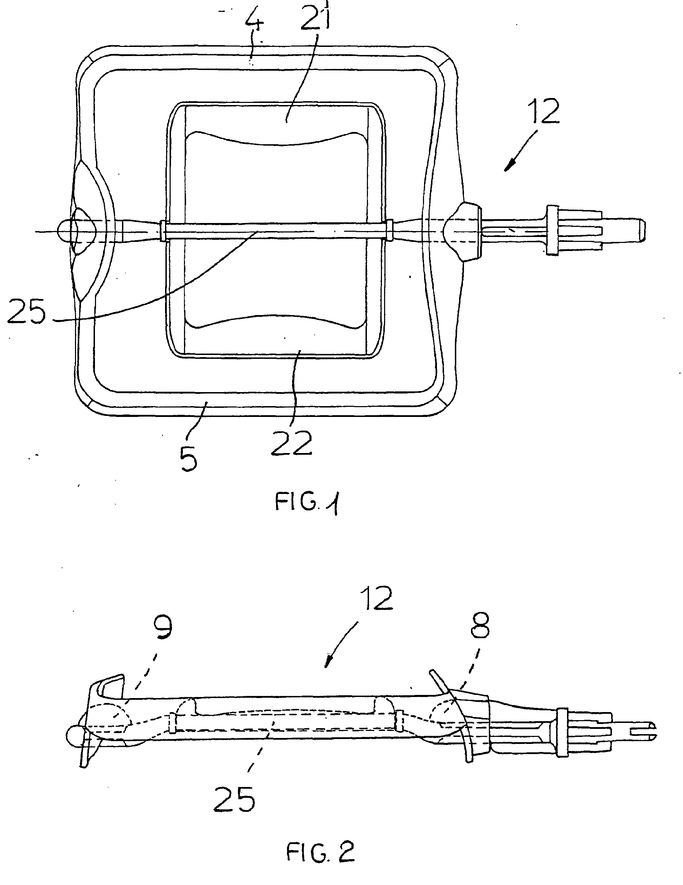

- figure 1 is a front view of the mixing blade according to the finding;
- figure 2 is a side view of the mixing blade according to the finding;

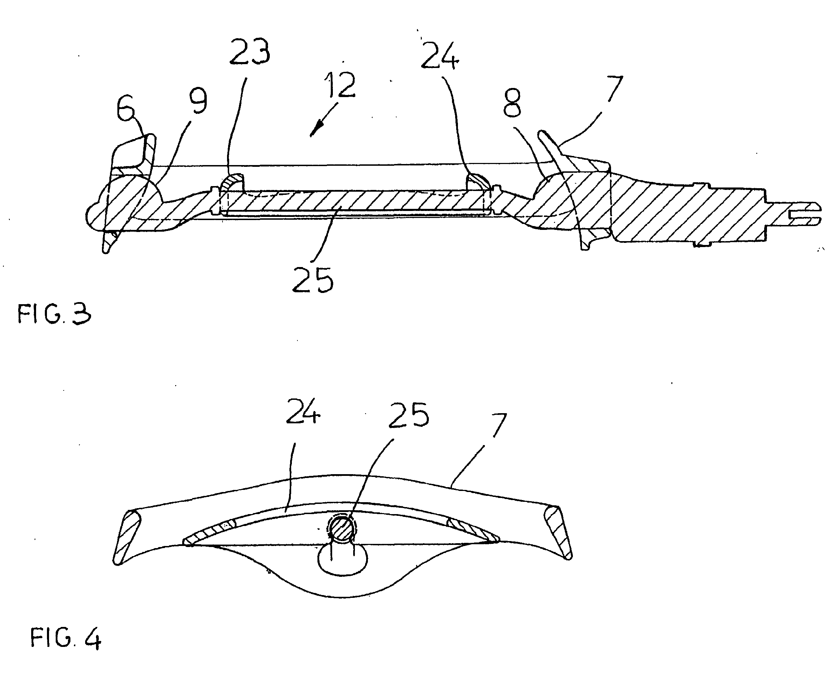

- figure 3 shows a side section view of the connection shaft of the first and second blade according to the finding;
- figure 4 is a cross-section view of the blade according to the finding; and

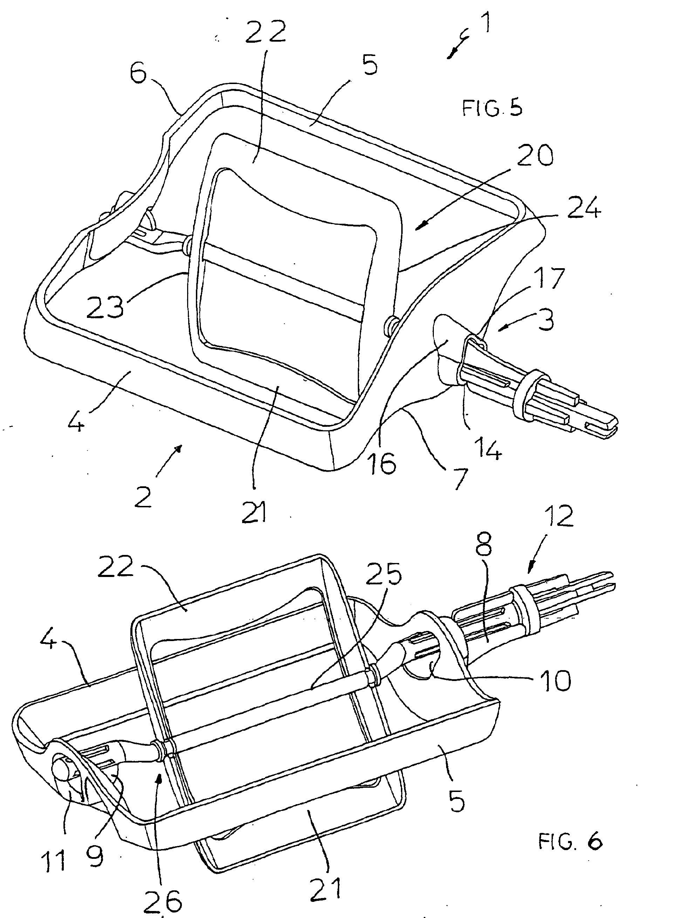

- figures 5 and 6 show perspective views of the association, both of the first and second mixing blade with their support shafts according to the finding.

With particular reference to the figures described above, the mixing device for ice-cream makers, wholly indicated with reference numeral 1, comprises rotation means, not represented and of the conventional type, for a mixing blade wholly indicated with 2, inside the bowl, not represented, in which the ice-cream is prepared.

Advantageously, the mixing device comprises radial displacement means, wholly indicated with 3, of the blade 2 in order to simultaneously increase the scraping and spreading of the ice-cream in at least two distinct areas of the surface of the bowl during the rotation of the blade 2.

The first blade 2 has at least one first and one second mixing surface which have the same angle of inclination, but which do not move in the same way.

More precisely, the first and second mixing surfaces 4 and 5 are arranged so that they converge with respect to the direction of rotation of the blade, be it clockwise or anti-clockwise so as to carry out the scraping and the spreading of the ice-cream mixture simultaneously on two distinct areas of the bowl diametrically opposed to each other.

The first and second surfaces 4 and 5 are joined together by an upper and lower joining element 6 and 7.

The lower joining element 7 has an inclined surface so that during the rotation of the blade this surface tends to convey the ice-cream mixture towards the centre of the bowl.

The displacement means of the first blade 2 comprises a rotation shaft, wholly indicated with 12, on which, in two distinct areas, there are two tabs 8 and 9 which engage in respective seats 10 and 11 which are present on the upper joining element 6 and the lower one 7.

Advantageously, the seats 10 and 11 are of a size and configuration suitable for allowing a radial displacement of the blade with respect to the rotation shaft 12 when the blade is subjected to a twisting moment generated by the ice-cream mixture in the bowl during its rotation therein.

In particular, the seats 10 and 11 have a substantially triangular configuration with a curvilinear base 14 in which the shaft 12 engages, whereas the respective tabs 8 and 9 engage between the two inclined sides 16 and 17 of the seat.

The mixing device also comprises a second blade, wholly indicated with 20, interacting with the first blade and arranged eccentrically with respect to it.

The second blade 20 also has a first and second mixing surface 21 and 22 which are exactly the same as each other, in that they have the same angle of inclination and they do not move in the same way in such a way as to prevent the concentration of the mixture around the rotation shaft 12.

The first and second surfaces 21 and 22 of the second blade 20 are joined together by an upper and lower joining element 23 and 24 which are identical.

The second blade is associated with a misaligned portion 25 of the shaft 12.

Moreover, the second blade 20 has positioning means, generically indicated with 26, suitable for allowing displacement with respect to the shaft 12 according to the moments which are generated on the second blade itself during its rotation to mix the ice-cream mixture.

The variable positioning means 6 can be made in different ways, but in particular must be suitable for allowing the positioning of the second blade in a predetermined position which can be chosen either manually or automatically.

In this second case, the automatic positioning of the second blade takes place thanks to the fact that the positioning means have elastically yielding members which engage with three rigid members to assume different orientations with respect to the first blade and to the misaligned shaft, according to the movement generated on the second blade during the mixing of the ice-cream.

In practice, if the second blade meets a resistance which is greater than the elasticity of the elastic members, they give way allowing the positioning of the second blade in a more inclined position and therefore subject to a lower moment value.

In the case in which the ice-cream mixture is extremely compact and hard, advantageously there is automatic inversion of the direction of rotation both of the first and of the second blade, since the motors which drive the rotation of the shaft 12 are able to invert the direction of rotation.

The change in direction of rotation, for example from clockwise to anti-clockwise or vice-versa, has absolutely no influence upon the efficiency of the action of the first blade and of the second blade on the ice-cream mixture, since both blades automatically realign themselves to allow both excellent scraping and spreading of the ice-cream mixture on the surface of the bowl.

In particular, in the case of the first blade when there is a force of a certain size generated on it by the ice-cream mixture, the displacement of the blade on the shaft along the curvilinear surface of the base 14 of each seat 10 and 11 intervenes, so as to act with greater intensity on the surface to be scraped and moving away by the necessary amount to carry out the spreading operation in an optimal manner.

Should the force exceed the predetermined value, the same motors which make the shaft 12 rotate invert their direction of rotation, solving the problem and perfectly adjusting the positioning of the first blade to the new direction of rotation.

The second blade, which is arranged misaligned with respect to the first blade, will follow a circular path inside the first blade due to the misalignment of the portion 25 of the shaft 12 and will take care of carrying out a perfect mixing of the ice-cream mixture, conveying it from the centre of the bowl outwards.

At the same time, should the second blade meet resistance of a certain size, it will rotate about the portion 25 by a sufficient number of turns to incline it, so as to reduce the resistance force during the automatic mixing operation, without causing any increase in strain on the motors for driving the shaft 12.

The finding thus conceived is susceptible to numerous modifications and variants, all of which are covered by the inventive concept.

Moreover, all of the details can be replaced by technically equivalent elements.

In practice, the materials used, as well as the sizes, can be whatever according to requirements and the state of the art.

## Claims

1. Mixing device for ice-cream makers comprising rotation means for a first mixing blade (2) inside a bowl for the preparation of ice-cream, **characterized in that** it comprices one second blade (20) interacting with said first blade (2) and arranged eccentrically with respect to it first and radial displacement means (3) for said first blade (2) allowing relative radial displacement between the rotational axes of said first blade (2) and said second blade (20) during the operation of said mixing device, and intended to simultaneously increase the scraping and spreading, respectively, of said ice-cream on at least two distinct areas of the surface of said bowl during the rotation of said first blade, said first blade (2) having at least one first and one second mixing surface (4) and (5) with the same angle of inclination, but which do not move in the same way in such a way as to carry out said scraping and said spreading on said diametrically opposed distinct areas of said bowl, said first and second surfaces (4) and (5) being joined together by an upper and lower joining element (6) and (7), at least said upper joining element having an inclined surface suitable for conveying said ice-cream mixture towards the centre of the bowl, said displacement means (3), comprising a rotation shaft (12) with tabs (8, 9) engaged in respective seats (10, 11) present on said upper and lower joining elements (6, 7), said seats (10, 11) being of a size and configuration suitable for allowing a radial displacement of said first blade (2) with respect to said rotation shaft (12) when said blade is subjected to a twisting moment generated by said ice-cream mixture.

2. Mixing device for ice-cream makers according to the previous claim, **characterised in that** said seat (10, 11) have a substantially triangular configuration with a curvilinear base (14).

3. Mixing device for ice-cream makers according to one or more of the previous claims, **characterised in that** each of said tabs (8, 9) engages between the two inclined sides (16, 17) of said seats (10, 11) and **in that** said shaft (12) engages in said curvilinear base (14).

4. Mixing device for ice-cream makers according to one or more of the previous claims, **characterised in that** said second blade (20) has at least one first and one second mixing surface (21, 22) with the same angle of inclination, but which do not move in the same way in such a way as to prevent the concentration of the mixture around said shaft (12).

5. Mixing device for ice-cream makers according to one or more of the previous claims, **characterised in that** said first and second surface (21, 22) of said second blade (20) are joined together by an upper and lower joining element (23, 24) which are identical.

6. Mixing device for ice-cream makers according to one or more of the previous claims, **characterised in that** said second blade (20) is associated with a misaligned portion (25) of said shaft (12).

7. Mixing device for ice-cream makers according to one or more of the previous claims, **characterised in that** said second blade (20) has variable positioning means (26) with said shaft (12) according to the moments generated on said second blade (20) by said ice-cream mixture during the rotation of said shafts (12).

8. Mixing device for ice-cream makers according to one or more of the previous claims, **characterised in that** said variable positioning means (26) is suitable for allowing the positioning of said second blade/in a predetermined position either manually or automatically.

9. Mixing device for ice-cream makers according to one or more of the previous claims, **characterised in that** said positioning means (26) has elastically yielding members engaged in rigid counter members to assume different orientations with respect to said first blade and said misaligned shaft, according to the moment generated on said second blade during the mixing of said ice-cream.

## Patentansprüche

1. Mischvorrichtung für Speiseeismaschinen bestehend aus Mitteln zur Rotation einer ersten Mischpalette (2) in einer Schüssel zur Speiseeiserzeugung, **dadurch gekennzeichnet, dass** selbige eine zweite Palette (20), welche mit besagter ersten Palette (2) zusammenwirkt und ihr gegenüber exzentrisch angebracht ist, und eine Vorrichtung zur radialen Verschiebung (3) der ersten Palette (2) umfasst, sodass zwischen den Drehungsachsen der besagten ersten Palette (2) und besagten zweiten Palette (20) während des Arbeitsvorgangs besagter Mischvorrichtung eine relative radiale Verschiebung ermöglicht wird, vorgesehen zur gleichzeitigen jeweiligen Zunahme des Aussonderns und des Verstreichens des genannten Speiseeises auf zumindest zwei verschiedenen Bereichen der Bodenfläche der besagten Schüssel während der Drehung der besagten ersten Palette, wobei die besagte erste Palette (2) zumindest eine erste und eine zweite Mischfläche (4,5) desselben Neigungswinkels aufweist, doch welche sich verschiedenartig bewegen, und zwar so, dass besagtes Aussondern und besagtes Verstreichen auf besagten Bereichen der besagten Schüssel durchgeführt wird, wobei die besagte erste und zweite Mischfläche (4,5) durch ein oberes und ein unteres Bindungselement (6,7) verbunden sind und zumindest das besagte obere Element eine Neigungsfläche aufweist, die sich eignet, die Eiscrememischung in Richtung Mitte der Schüssel zu führen, wobei die besagten Verschiebungsmittel (3) einen Rotationsschaft (12) mit Rippen (8,9) aufweisen, die in entsprechenden Sitzen (10,11) verankert sind, die auf die gesagten oberen und unteren Verbindungselementen (6,7) vorhanden sind, wobei besagte Sitze (10,11) die passende Größe und Beschaffenheit besitzen, um eine radiale Verschiebung der besagten ersten Palette (2) in Hinsicht auf den besagten Rotationsschaft (12) zu ermöglichen, wenn besagte Palette einem von der Eiscrememischung hervorgerufenen Schwingugsmoment unterliegt.

2. Mischvorrichtung für Speiseeismaschinen gemäß dem vorhergehenden Anspruch, **dadurch gekennzeichnet, dass** besagte Sitze (10,11) eine grundsätzlich dreieckige Beschaffenheit mit einer krummlinigen Basis (14) besitzen.

3. Mischvorrichtung für Speiseeismaschinen gemäß einem oder mehreren der vorhergehenden Ansprüche, **dadurch gekennzeichnet, dass** jede der genannten Rippen (8,9) zwischen den beiden schrägen Seiten ,(16,17) der Sitze (10,11) verankert ist und dass der besagte Schaft (12) in der besagten krummlinigen Basis (14) verankert ist.

4. Mischvorrichtung für Speiseeismaschinen gemäß einem oder mehreren der vorhergehenden Ansprüche, **dadurch gekennzeichnet, dass** die besagte zweite Palette (20) zumindest eine erste und eine zweite Mischfläche (21,22) desselben Neigungswinkels aufweist, doch welche sich verschiedenartig bewegen und zwar so, dass eine Ansammlung der Mischung um den Schaft (12) herum vermieden wird.

5. Mischvorrichtung für Speiseeismaschinen gemäß einem oder mehreren der vorhergehenden Ansprüche, **dadurch gekennzeichnet, dass** die erste und zweite Fläche (21,22) der zweiten Palette (20) durch ein oberes und unteres Verbindungselement (23,24) miteinander verbunden sind, welche identisch sind.

6. Mischvorrichtung für Speiseeismaschinen gemäß einem oder mehreren der vorhergehenden Ansprüche, **dadurch gekennzeichnet, dass** die besagte zweite Palette (20) mit einem nicht fluchtenden Teil (25) jenes Schaftes (12) verbunden ist.

7. Mischvorrichtung für Speiseeismaschinen gemäß einem oder mehreren der vorhergehenden Ansprüche, **dadurch gekennzeichnet, dass** die besagte zweite Palette (20) variable Positionsmittel (26) gemäß den Momenten aufweist, die auf die zweite Palette (20) während der Rotation jenes Schaftes (12) durch die genannte Eiscrememischung ausgeübt werden.

8. Mischvorrichtung für Speiseeismaschinen gemäß einem oder mehreren der vorhergehenden Ansprüche, **dadurch gekennzeichnet, dass** besagte variable Positionsmittel (26) dazu geeignet sind, eine entweder manuelle oder automatische bestimmte Positionierung der besagten zweiten Palette (20) zu ermöglichen.

9. Mischvorrichtung für Speiseeismaschinen gemäß einem oder mehreren der vorhergehenden Ansprüche, **dadurch gekennzeichnet, dass** jenes Positionsmittel (26) elastische nachgebende Glieder aufweist, welche in festen Gegengliedern eingerastet sind, um verschiedene Richtungen in Bezug auf die besagte erste Palette und den besagten nicht fluchtenden Schaft gemäß dem Moment einzuschlagen, welcher auf die besagte zweite Palette während der Mischung jener Eiscreme ausgeübt wird.

## Revendications

1. Dispositif mélangeur pour machines destinées à la préparation de la glace comprenant des moyens de rotation pour une première palette mélangeuse (2) à l'intérieur d'une cuvette pour la préparation de glace, **caractérisé en ce qu'**il comprend une seconde palette (20) interagissant avec ladite première palette (2) et qu'il est aménagé excentriquement par rapport à cette dernière, et un moyen (3) de déplacement radial pour ladite première palette (2) permettant un relatif déplacement radial entre les axes de rotation de ladite première palette (2) et ladite seconde palette (20), pendant le fonctionnement dudit dispositif mélangeur, et qu'il est conçu pour augmenter d'une façon simultanée, respectivement le raclage et l'étalage de ladite glace dans au moins deux zones distinctes de la surface de ladite cuvette pendant la rotation de ladite première palette,
ladite première palette (2) ayant au moins une première et une seconde surface de mélange (4 et 5) avec le même angle d'inclinaison, mais qui ne bougent pas de la même manière de façon à effectuer ledit raclage et ledit étalage dans lesdites zones distinctes diamétralement opposées de ladite cuvette,
lesdites première et seconde surfaces (4 et 5) étant reliées par un élément de jonction supérieur et un élément de jonction inférieur (6 et 7), au moins ledit élément de jonction supérieur ayant une surface inclinée apte à convoyer ledit mélange de glace vers le centre de la cuvette,
ledit moyen de déplacement (3) comprenant un arbre tournant (12) avec des ailettes (8,9) engagées dans des sièges respectifs (10,11) présents par-dessus lesdits éléments de jonction supérieurs et inférieurs (6,7), lesdits sièges (10,11) ayant une taille et une configuration aptes à permettre un déplacement radial de ladite première palette (2) par rapport au dit arbre tournant (12) lorsque ladite palette est assujettie à un moment de torsion engendré par ledit mélange de glace.

2. Dispositif mélangeur pour machines destinées à la préparation de la glace selon la revendication précédente, **caractérisé en ce que** lesdits sièges (10,11) ont une configuration sensiblement triangulaire avec une base curviligne (14).

3. Dispositif mélangeur pour machines destinées à la préparation de la glace selon l'une ou plusieurs des revendications précédentes, **caractérisé en ce que** chacune desdites ailettes (8,9) s'engage entre les deux côtés inclinés (16,17) desdits sièges (10,11) et **en ce que** ledit arbre (12) s'engage dans ladite base curviligne (14).

4. Dispositif mélangeur pour machines destinées à la préparation de la glace selon l'une ou plusieurs des revendications précédentes, **caractérisé en ce que** ladite seconde palette (20) a au moins une première et une seconde surface de mélange (21,22) avec le même angle d'inclinaison, mais qui ne bougent pas de la même manière de façon à empêcher le mélange de se concentrer autour dudit arbre (12).

5. Dispositif mélangeur pour machines destinées à la préparation de la glace selon l'une ou plusieurs des revendications précédentes, **caractérisé en ce que** lesdites première et seconde surface (21,22) de ladite seconde palette (20) sont reliées par un élément de jonction supérieur et un élément de jonction inférieur (23,24) qui sont identiques.

6. Dispositif mélangeur pour machines destinées à la préparation de la glace selon l'une ou plusieurs des revendications précédentes, **caractérisé en ce que** ladite seconde palette (20) est associée à une portion désalignée (25) dudit arbre (12).

7. Dispositif mélangeur pour machines destinées à la préparation de la glace selon l'une ou plusieurs des revendications précédentes, **caractérisé en ce que** ladite seconde palette (20) possède un moyen de positionnement variable. (26) avec ledit arbre (12) selon les moments engendrés sur ladite seconde palette (20) par ledit mélange de glace pendant la rotation dudit arbre (12).

8. Dispositif mélangeur pour machines destinées à la préparation de la glace selon l'une ou plusieurs des revendications précédentes, **caractérisé en ce que** ledit moyen de positionnement variable (26) est apte à permettre le positionnement de ladite seconde palette (20) dans une position prédéterminée soit manuellement soit automatiquement.

9. Dispositif mélangeur pour machines destinées à la préparation de la glace, **caractérisé en ce que** ledit moyen de positionnement (26) possède des membres de fléchissement élastique engagés dans des membres antagonistes rigides pour prendre de différentes orientations par rapport à ladite première palette et audit arbre désalignée, selon le moment engendré sur ladite seconde palette pendant que ladite glace est mélangée.
